# EUROPÄISCHE PATENTSCHRIFT

(11) **EP 2 403 900 B1**
(45) Veröffentlichungstag und Bekanntmachung des Hinweises auf die Patenterteilung: **07.05.2014**
(21) Anmeldenummer: 10706223.4
(22) Anmeldetag: 01.03.2010
(51) Int. Cl.: C08J 9/00, C08J 9/232

(54) **ELASTISCHER PARTIKELSCHAUMSTOFF AUF BASIS VON POLYOLEFIN/STYROLPOLYMER-MISCHUNGEN**
ELASTIC PARTICLE FOAM MATERIAL BASED ON POLYOLEFIN/STYRENE POLYMER MIXTURES
PRODUIT MOUSSE ÉLASTIQUE EN PARTICULES, À BASE DE MÉLANGES DE POLYMÈRES DE POLYOLÉFINE/STYRÈNE

(30) Priorität: 05.03.2009 EP 09154432
(43) Veröffentlichungstag der Anmeldung: 11.01.2012
(73) Patentinhaber: BASF SE, 67056 Ludwigshafen (DE)
(72) Erfinder: SCHIPS, Carsten, 67342 Speyer (DE); AßMANN, Jens, 68165 Mannheim (DE); GRÄßEL, Georg, 67063 Ludwigshafen (DE); JANSSENS, Geert, 67159 Friedelsheim (DE); HOFMANN, Maximilian, 68167 Mannheim (DE); RUCKDÄSCHEL, Holger, 67487 St Martin (DE); LAMBERT, Jürgen, 67377 Gommersheim (DE); ZYLLA, Christof, 67117 Limburgerhof (DE)
(86) Internationale Anmeldenummer: PCT/EP2010/052525
(87) Internationale Veröffentlichungsnummer: WO 2010/100101

(56) Entgegenhaltungen:
- WO-A1-2004/065468
- WO-A1-2007/023089
- WO-A1-2008/125250
- WO-A1-2009/112549

## Beschreibung

Die Erfindung betrifft elastische Partikelschaumstoffe sowie ein Verfahren zu deren Herstellung durch Versintern einer Mischung enthalten Schaumstoffpartikel P1 und P2 aus unterschiedlichen thermoplastischen Polymeren oder Polymermischungen.

Polystyrolschaumstoffe sind harte Schaumstoffe. Ihre geringe Elastizität ist für viele Anwendungen, beispielsweise auf dem Verpackungsgebiet, nachteilig, da der Schutz des verpackten Gutes gegen Schlag- und Stoßbeanspruchung nur unzureichend möglich ist und die als Verpackungsmittel verwendeten Schaumstoffformteile bereits bei geringer Deformation brechen, wobei die Schutzwirkung des Schaumstoffs bei einer nochmaligen Belastung verloren geht. Es gab daher in der Vergangenheit bereits Versuche, die Elastizität von Polystyrolschaumstoffen zu erhöhen.

Expandierbare Polymermischungen aus Styrolpolymeren, Polyolefinen und gegebenenfalls Lösungsvermittlern, wie hydrierte Styrol-Butadien-Blockcopolymeren, sind beispielsweise aus DE 24 13 375, DE 24 13 408 oder DE 38 14 783 bekannt. Die daraus erhältlichen Schaumstoffe sollen gegenüber Schaumstoffen aus Styrolpolymeren bessere mechanischen Eigenschaften, insbesondere eine bessere Elastizität und eine geringere Sprödigkeit bei tiefen Temperaturen, sowie eine Unempfindlichkeit gegenüber Lösungsmitteln, wie Essigester und Toluol, aufweisen. Das Treibmittelhaltevermögen und die Verschäumbarkeit der expandierbaren Polymermischungen zu niedrigen Dichten sind für die Verarbeitung jedoch nicht ausreichend.

Die WO 2005/056652 beschreibt Partikelschaumstoffformteile mit einer Dichte im Bereich von 10 bis 100 g/l, die durch Verschweißen von vorgeschäumten Schaumstoffpartikeln aus expandierbaren, thermoplastischen Polymergranulaten erhältlich sind. Die Polymergranulate enthalten Mischungen aus Styrolpolymeren und anderen thermoplastischen Polymeren und können durch Schmelzeimprägnierung und anschließender Druckunterwassergranullerung erhalten werden.

Des Weiteren sind elastische Partikelschaumstoffe aus expandierbaren Interpolymerpartikeln bekannt (z. B. US 2004/0152795 A1). Die Interpolymeren sind durch Polymerisation von Styrol in Gegenwart von Polyolefinen in wässriger Suspension erhältlich und bilden ein Interpenetrierendes Netzwerk aus Styropolymeren und Olefinpolymeren. Aus den expandierbaren Polymerpartikeln diffundiert das Treibmittel jedoch schnell heraus, so dass sie bei tiefen Temperaturen gelagert werden müssen und nur eine kurze Zeit eine ausreichende Verschäumbarkeit aufweisen.

WO 2008/050909 beschreibt elastische Partikelschaumstoffe aus expandierten Interpolymerpartikeln mit einer Kern-Schale-Struktur, wobei der Kern aus einem Polystyrol-Polyolefin-Interpolymer und die Schale aus einem Polyolefin besteht. Diese Partikelschaumstoffe weisen im Vergleich zum EPS eine verbesserte Elastizität und Rissbeständigkeit auf und werden in erster Linie als Transportverpackung oder als Energieabsorber in Automobilanwendungen eingesetzt.

Die WO 2005/092959 beschreibt nanoporöse Polymerschaumstoffe, die aus treibmittelhaltigen, mehrphasigen Polymermischungen mit Domänen im Bereich von 5 bis 200 nm erhältlich sind. Bevorzugt bestehen die Domänen aus einem durch Emulsionspolymerisation erhältlichen Kern-Schale-Teilchen, in denen die Löslichkeit des Treibmittels mindestens doppelt so hoch ist, als in den angrenzenden Phasen.

Eine neue Klasse von thermoplastischen Partikelschaumstoffen mit Zellen einer mittleren Zellgröße im Bereich von 20 bis 500 µm, in denen die Zellmembranen eine nanozelluläre oder faserförmige Struktur mit Poren- bzw. Faserdurchmessem unter 1500 nm aufweisen, wurde in WO 2008/125250 beschrieben.

Die bekannten rissbeständigen Schaumstoffe, beispielsweise aus expandierten Polyolefinen, expandierten Interpolymeren oder expandierbaren Interpolymeren, sind in der Regel nicht oder nur schlecht mit vorgeschäumte, expandierbaren Polsystyrol (EPS) - Partikeln kompatibel. Häufig ist bei der Verarbeitung zu Formteilen, wie Schaumstoffblöcken, eine schlechte Verschweißung der unterschiedlichen Schaustoffpartikel zu beobachten.

Aufgabe der vorliegenden Erfindung war es, den vorgenannten Nachteilen abzuhelfen und elastische Partikelschaumstoff auf Basis von Polyolefin/Styrolpolymer-Mischungen bereitzustellen, die eine hohe Druck- und Biegefestigkeit und Energieabsorption, vergleichbar mit herkömmlichen Partikelschaumstoffen aus expandierbarem Polystyrol (EPS) und gleichzeitig eine deutlich verbesserte Elastizität, Rissbeständigkeit und Biegearbeit aufweisen, sowie ein Verfahren zu deren Herstellung.

Demgemäß wurde ein Verfahren zur Herstellung von Partikelschaumstoffen durch Versintern einer Mischung enthaltend Schaumstoffpartikel P1 und P2 aus unterschiedlichen thermoplastischen Polymeren oder Polymermischungen gefunden, wobei die Schaumstoffpartikel P1 und P2 eine Dichte im Bereich von 5 bis 80 kg/m³ aufweisen und wobei die Schaumstoffpartikel P1 durch Vorschäumen von expandierbaren, thermoplastischen Polymerpartikeln, enthaltend
A) 45 bis 97,9 Gewichtsprozent eines Styrolpolymeren,
B1) 1 bis 45 Gewichtsprozent eines Polyolefins mit einem Schmelzpunkt im Bereich von 105 bis 140°C,
B2) 0 bis 25 Gewichtsprozent eines Polyolefins mit einem Schmelzpunkt unter 105°C,
C1) 0,1 bis 25 Gewichtsprozent eines Styrol-Butadien- oder Styrol-Isopren-Blockcopolymeren,
C2) 0,0 bis 10 Gewichtsprozent eines Styrol-Ethylen-Butylen-Blockcopolymeren,
D) 1 bis 15 Gewichtsprozent eines Treibmittels,
E) 0 bis 5 Gewichtsprozent eines Nukleierungsmittels,
wobei die Summe aus A) bis E) 100 Gew.-% ergibt, erhalten werden.

Gegenstand der Erfindung sind auch die nach dem Verfahren erhältlichen Partikelschaumsstoffe.

Bevorzugte Schaumstoffpartikel P1 werden durch Vorschäumen von expandierbaren, thermoplastischen Polymerpartikeln erhalten, welche
A) 55 bis 78,1 Gewichtsprozent eines Styrolpolymeren,
B1) 7 bis 15 Gewichtsprozent eines Polyolefins mit einem Schmelzpunkt im Bereich von 105 bis 140°C,
B2) 5 bis 10 Gewichtsprozent eines Polyolefins mit einem Schmelzpunkt unter 105°C,
C1) 6 bis 15 Gewichtsprozent eines Styrol-Butadien- oder Styrol-Isopren-Blockcopolymeren,
C2) 0,8 bis 3 Gewichtsprozent eines Styrol-Ethylen-Butylen-Blockcopolymeren,
D) 3 bis 10 Gewichtsprozent eines Treibmittels,
E) 0,3 bis 2 Gewichtsprozent eines Nukleierungsmittels
enthalten, wobei die Summe aus A) bis E) 100 Gew.-% ergibt.

Besonders bevorzugt bestehen die expandierbaren, thermoplastischen Polymerpartikel, aus denen die Schaumstoffpartikel P1 durch Vorschäumen erhalten werden, aus den Komponenten A) bis E). In den Schaumstoffpartikeln ist das Treibmittel (Komponente D) beim Vorschäumen im Wesentlichen entwichen.

### Schaumstoffpartikel P1:

Die expandierbaren thermoplastischen Polymerpartikel enthalten 45 bis 97,9 Gew.-%, bevorzugt 55 bis 78,1 Gew.-% eines Styrolpolymeren A), wie Standard (GPPS)- oder Schlagzähpolystyrol (HIPS) oder Styrol-Acrylnitril-Copolymere (SAN) oder AcrylnitrilButadien-Styrol-Copolymere (ABS) oder Mischungen davon. Die zur Herstellung der Schaumstoffpartikel P1 eingesetzten expandierbaren, thermoplastischen Polymerpartikel enthalten als Styrolpolymer A) bevorzugt Standard-Polystyrol (GPPS). Besonders bevorzugt werden Standard-Polystyroltypen mit gewichtsmittleren Molekulargewichten im Bereich von 120.000 bis 300.000 g/mol, insbesondere 190.000 bis 280.000 g/mol, ermittelt mit Gelpermeationschromatographie; und einer Schmelzevolumenrate MVR (200°C/5 kg) nach ISO 113 im Bereich von 1 bis 10 cm³/10 min, beispielsweise PS 158 K, 168 N oder 148 G der BASF SE eingesetzt. Zur Verbesserung der Verschweißung der Schaumstoffpartikel bei der Verarbeitung zum Formteil können leichtfließende Typen, beispielsweise Empera® 156L (Innovene) zugesetzt werden

Als weitere Komponenten B) enthalten die expandierbaren thermoplastischen Polymerpartikel Polyolefine B1) mit einem Schmelzpunkt im Bereich von 105 bis 140°C und Polyolefine B2) mit einem Schmelzpunkt unter 105°C. Der Schmelzpunkt ist der mittels DSC (Dynamical Scanning Calorimetrie) bei einer Aufheizrate von 10°C/Minute ermittelte Schmelzpeak.

Die expandierbaren, thermoplastischen Polymerpartikel enthalten 1 bis 45 Gewichtsprozent, insbesondere 7 bis 15 Gew.-% eines Polyolefins B1). Als Polyolefin B1) wird bevorzugt ein Homo- oder Copolymerer von Ethylen und/oder Propylen mit einer Dichte im Bereich von 0,91 bis 0,98 g/L (bestimmt nach ASTM D792), insbesondere Polyethylen eingesetzt. Als Polypropylene kommen insbesondere Spritzgusstypen in Betracht. Als Polyethylene kommen kommerziell erhältliche Homopolymere aus Ethylen, wie PE-LD (Spritzgusstypen), -LLD, -HD, oder Copolymere aus Ethylen und Propylen (z. B Moplen® RP220 und Moplen® RP320 der Basell oder Versify®-Typen der Dow), Ethylen und Vinylacetat (EVA), Ethylenacrylate (EA) oder Ethylen-Butylen-Acrylate (EBA) in Frage. Der Schmelzevolumenindex MVI (190°C/2,16 kg) der Polyethylene liegt üblicherweise im Bereich von 0,5 bis 40 g/10 min, die Dichte im Bereich von 0,91 bis 0,95 g/cm³. Außerdem können Abmischungen mit Polyisobuten (PIB)(z. B. Oppanol® B150 der BASF Aktengesellschaft) eingesetzt werden. Besonders bevorzugt wird LLDPE mit einem Schmelzpunkt im Bereich von 110 bis 125°C und einer Dichte im Bereich von 0,92 bis 0,94 g/L eingesetzt.

Als Komponente B1) eigen sich auch Olefinblockcopolymere, welche sich aus einem Polyolefinblock PB1 (Hartblock) und einem Polyolefinblock PB2 (Weichblock) zusammensetzen, wie sie beispielsweise in WO 2006/099631 beschrieben sind. Der Polyolefinblock PB1 besteht bevorzugt aus 95 bis 100 Gew.-% Ethylen. Der PB2-Block besteht bevorzugt aus Ethylen und α-Olefin, wobei als α-Olefine Styrol, Propylen, 1-Buten, 1-Hexen, 1-Octen, 4-Methyl-1-Penten, Norbornene, 1-Decen, 1,5-Hexadien oder Mischungen davon in Betracht kommen. Bevorzugt wird als PB2-Block ein Ethylen-α-Olefin-Copolymerblock mit 5 bis 60 Gew.-% -α-Olefin, insbesondere ein Ethylen-Octen-Copolymerblock. Bevorzugt sind Multiblockcopolymere der Formel (PB1-PB2)n, wobei n für eine ganze Zahl zwischen 1 bis 100 steht. Die Blöcke PB1 und PB2 bilden im wesentlich eine lineare Kette und sind bevorzugt alternierend oder statistisch verteilt. Der Anteil der PB2-Blöcke beträgt bevorzugt 40 bis 60 Gew.-%, bezogen auf das Olefinblockcopolymer. Besonders bevorzugt sind Olefinblockcopolymer mit alternierenden, harten PB1-Blöcken und weichen, elastomeren PB2-Blöcken, die im Handel unter der Bezeichnung INFUSE® erhältlich sind.

Mit geringerem Anteil an Polyolefin B1) nimmt das Treibmittelhaltevermögen deutlich zu. Damit werden die Lagerfähigkeit und die Verarbeitbarkeit der expandierbaren, thermoplastischen Polymerpartikel deutlich verbessert. Im Bereich von 4 bis 20 Gew.-% Polyolefin erhält man expandierbare thermoplastische Polymerpartikel mit langer Lagerfähigkeit, ohne dass sich die elastischen Eigenschaften des daraus hergestellten Partikelschaumstoffs verschlechtern. Dies zeigt sich beispielsweise in einem geringern Entformungsrest εᵣₑₛₜ im Bereich von 25 bis 35 %.

Als Polyolefin B2) enthalten die expandierbaren, thermoplastischen Polymerpartikel 0 bis 25 Gewichtsprozent, insbesondere 1 bis 10 Gew.-% eines Polyolefins B2) mit einem Schmelzpunkt unter 105°C. Das Polyolefin B2) weist vorzugsweise eine Dichte im Bereich von 0,86 bis 0,90 g/L (bestimmt nach ASTM D792) auf. Hierfür eignen sich insbesondere thermoplastische Elastomere auf Basis von Olefinen (TPO). Besonders bevorzugt werden Ethylen-Octen-Copolymere, die beispielsweise im Handel unter der Bezeichnung Engage® 8411 von der Firma Dow erhältlich sind. Expandierbare, thermoplastische Polymerpartikel, die die Komponente B2) enthalten, zeigen nach der Verarbeitung zu Schaumstoffformteilen eine deutliche Verbesserung in der Biegearbeit und Reißfestigkeit.

Es ist aus dem Bereich der mehrphasigen Polymersysteme bekannt, dass die meisten Polymere nicht oder nur geringfügig miteinander mischbar sind (Flory), so dass es je nach Temperatur, Druck und chemischer Zusammensetzung zur Entmischung in jeweilige Phasen kommt. Werden unverträgliche Polymere kovalent miteinander verknüpft, so findet die Entmischung nicht auf makroskopischer, sondern lediglich auf mikroskopischer Ebene statt, d.h. auf der Längenskala der einzelnen Polymerkette. In diesem Fall spricht man daher von Mikrophasenseparation. Daraus resultieren eine Vielzahl von mesoskopischen Strukturen, z.B. lamellare, hexagonale, kubische und bikontinuierliche Morphologien, die eine starke Verwandtschaft mit lyotropen Phasen aufweisen.

Zur gezielten Einstellung der gewünschten Morphologie werden erfindungsgemäß Verträglichkeitsvermittler (Komponenten C) eingesetzt. Eine weitere Verbesserung der Verträglichkeit wird durch die Verwendung einer Mischung von Styrol-Butadien- oder Styrol-Isopren-Blockcopolymeren als Komponente C1) und Styrol-Etylen-Butylen-Blockcopolymeren (SEBS) als Komponente C2) erreicht.

Die Verträglichkeitsvermittler führen zu einer verbesserten Haftung zwischen der Polyolefin-reichen und der Styrolpolymerreichen Phase und verbessern schon in geringen Mengen die Elastizität des Schaumstoffs deutlich gegenüber herkömmlichen EPS-Schaumstoffen. Untersuchungen zur Domänengröße der Polyolefinreichen Phase zeigten, dass der Verträglichkeitsvermittler durch Reduktion der Grenzflächenspannung kleine Tröpfchen stabilisiert.

An elektronenmikroskopischen Aufnahmen eines Schnittes durch ein treibmittelhaltiges, expandierbares Polystyrol-/Polyethylenmischungen sind disperse Polyethylendomänen in der Polystyrolmatrix erkennbar.

Die expandierbaren, thermoplastischen Polymerpartikel enthalten als Komponente C1) 0,1 bis 25 Gewichtsprozent, insbesondere 6 bis 15 Gew.-% eines Styrol-Butadien- oder Styrol-Isopren-Blockcopolymeren.

Hierfür eignen sich beispielsweise Styrol-Butadien- oder Styrol-Isopren-Blockcopolymere. Der Gesamtdiengehalt liegt bevorzugt im Bereich von 20 bis 60 Gew.-%, besonders bevorzugt im Bereich von 30 bis 50 Gew.-%, der Gesamtstyrolgehalt liegt entsprechend bevorzugt im Bereich von 40 bis 80 Gew.-%, besonders bevorzugt im Bereich von 50 bis 70 Gew.-%.

Geeignete Styrol-Butadien-Blockcopolymere, welche aus mindestens zwei Polystyrolblöcken S und mindestens einem Styrol-Butadien-Copolymer-Block S/B bestehen, sind beispielsweise sternförmig verzweigte Blockcopolymere, wie sie in EP-A 0654488 beschrieben sind.

Des Weiteren eignen sich Blockcopolymere mit mindestens zwei Hartblöcken S₁ und S₂ aus vinylaromatischen Monomeren mit mindestens einem dazwischen liegenden statistischen Weichblock B/S aus vinylaromatischen Monomeren und Dien, wobei der Anteil der Hartblöcke über 40 Gew.-%, bezogen auf das gesamte Blockcopolymer beträgt und der 1,2-Vinylgehalt im Weichblock B/S unter 20 % beträgt, wie sie in WO 00/58380 beschrieben sind.

Als Verträglichkeitsvermittler sind auch lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. geeignet. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12 bis 16 %.

Als Verträglichkeitsvermittler werden bevorzugt Styrol-Butadien-Styrol (SBS) Dreiblockcopolymere mit einem Butadiengehalt von 20 bis 60 Gew.-%, bevorzugt 30 bis 50 Gew.-%, welche teilweise hydriert oder nicht hydriert sein können, verwendet. Diese sind beispielsweise unter der Bezeichnung Styroflex® 2G66, Styrolux® 3G55, Styroclear® GH62, Kraton® D 1101, Kraton® D 1155, Tuftec® H 1043 oder Europren® SOL T6414 im Handel. Dabei handelt es sich um SBS-Blockcopolymerer mit scharfen Übergängen zwischen B- und S-Blöcken.

Als Komponente C2) enthalten die expandierbaren, thermoplastischen Polymerpartikel 0 bis 10 Gewichtsprozent, insbesondere 0,8 bis 3 Gew.-% eines Styrol-Etylen-Butylen-Blockcopolymeren (SEBS). Geeignete Styrol-Etylen-Butylen-Blockcopolymere (SEBS) sind beispielsweise solche, die durch Hydrierung der olefinischen Doppelbindungen der Blockcopolymeren C1) erhältlich sind. Geeignete Styrol-Ethylen-Butylen-Blockcopolymere sind beispielsweise die im Handel erhältlichen Kraton® G Typen, insbesondere Kraton® G 1650.

Des Weiteren können der mehrphasigen Polymermischung Additive, Keimbildner, Weichmacher, halogenhaltige oder halogenfreie Flammschutzmittel, lösliche und unlösliche anorganische und/oder organische Farbstoffe und Pigmente, Füllstoffe oder Cotreibmittel in Mengen zugesetzt werden, die die Domänenbildung und daraus resultierende Schaumstoffstruktur nicht beeinträchtigen.

Als Komponente E) enthalten die expandierbaren, thermoplastischen Polymerpartikel 0 bis 5 Gewichtsprozent, bevorzugt 0,3 bis 2 Gewichtsprozent eines Keimbildners oder Nukleierungsmittels, beispielsweise Talkum.

Als Treibmittel (Komponente D) enthalten die expandierbaren, thermoplastischen Polymerpartikel 1 bis 15 Gewichtsprozent, bevorzugt 3 bis 10 Gewichtsprozent, bezogen auf die Summe aller Komponenten A) bis E), eines physikalischen Treibmittels. Die Treibmittel können bei Raumtemperatur (20 bis 30°C) und Normaldruck gasförmig oder flüssig sein. Sie sollten einen Siedepunkt unterhalb der Erweichungstemperatur der Polymermischung, üblicherweise Im Bereich von -40 bis 80°C, bevorzugt im Bereich von -10 bis 40°C. Geeignete Treibmittel sind beispielsweise halogenierte oder halogenfreie aliphatische Kohlenwasserstoffe, Alkohole, Ketone oder Ether. Als aliphatische Treibmittel eignen sich beispielsweise aliphatische C₃ bis C₈-Kohlenwasser-stoffe, wie n-Propan, n-Butan, iso-Butan, n-Pentan, iso-Pentan, n-Hexan, Neopentan, cycloaliphatische Kohlenwasserstoffe, wie Cyclobutan und Ccylopentan, halogenierte Kohlenwasserstoffe, wie Methylchlorid, Ethylchlorid, Methylenchlorid, Trichlorofluormethan, Dichlorfluormethan, Dichlordifluormethan, Chlordifluormethan, Dichlortetrafluorethan und Mischungen davon. Bevorzugt werden die halogenfreien Treibmittel iso-Butan, n-Butan, iso-Pentan, n-Pentan, Neopentan, Cyclopentan und Mischungen davon.

Geeignete Cotreibmittel sind solche mit einer geringeren Selektivität der Löslichkeit für die Domänen bildenden Phase, beispielsweise Gase wie CO₂, N₂, Fluorkohlenwasserstoffe oder Edelgase. Diese werden bevorzugt in Mengen von 0 bis 10 Gew.-%, bezogen auf die expandierbaren, thermoplastischen Polymerpartikel eingesetzt.

Die Polymermischung mit einer kontinuierlichen und einer dispersen Phase kann durch Mischen von zwei unverträglichen thermoplastischen Polymeren, beispielsweise in einem Extruder, hergestellt werden.

Die expandierbaren thermoplastischen Polymerpartikel können durch ein Verfahren erhalten werden, bei dem man
a) eine Polymermischungen mit einer kontinuierlichen und einer dispersen Phase durch Mischen der Komponenten A) bis C) und gegebenenfalls E) herstellt,
b) diese Mischungen mit einem Treibmittel D) imprägniert und zu expandierbaren thermoplastischen Polymerpartikel granuliert,
c) und zu expandierbaren, thermoplastischen Polymerpartikel durch Unterwassergranulierung bei einem Druck im Bereich von 1,5 bis 10 bar granuliert.

Der mittlere Durchmesser der dispersen Phase der in Stufe a) hergestellten Polymermischung liegt bevorzugt im Bereich von 1 bis 2000 nm, besonders bevorzugt im Bereich von 100 bis 1500 nm.

In einer weiteren Ausführungsform kann in Stufe b) die Polymermischung auch zuerst granuliert und die Granulate anschließend in wässriger Phase unter Druck und erhöhter Temperatur mit einem Treibmittel D) zu expandierbaren thermoplastischen Polymerpartikel nachimprägniert werden. Diese können anschließend nach Abkühlen unter die Schmelzetemperatur der Polymermatrix isoliert oder als vorgeschäumten Schaumstoffpartikeln direkt durch Druckentspannung erhalten werden.

Besonders bevorzugt wird ein kontinuierliches Verfahren, bei dem die Stufe a) ein thermoplastisches, die kontinuierliche Phase bildenden Styrolpolymer A), beispielsweise Polystyrol, in einem Zweiwellen-Extruder aufgeschmolzen und zur Bildung der Polymermischung mit einem die disperse Phase bildenden Polyolefin B1) und B2) sowie den Verträglichkeitsvermittlern C1) und C2) und gegebenenfalls Nukleierungsmittel E) vermischt wird und anschließend die Polymerschmelze in Stufe b) durch eine oder mehrere statische und/oder dynamischen Mischelemente gefördert und mit dem Treibmittel D) imprägniert wird. Die treibmittelbeladene Schmelze kann anschließend durch eine entsprechende Düse zu Schaumstoffplatten, -strängen oder-Partikeln extrudiert und geschnitten werden.

Mittels Unterwassergranulierung (UWG) kann die aus der Düse austretende Schmelze auch direkt zu expandierbaren oder gezielt angeschäumten Polymerpartikeln geschnitten werden. Die Einstellung des geeigneten Gegendrucks und einer geeigneten Temperatur im Wasserbad des UWG ermöglicht somit eine gezielte Herstellung von Schaumstoffpartikeln zu ermöglichen.

Zur Herstellung der expandierbaren Polymerpartikel wird die Unterwassergranulierung in der Regel bei Drücken im Bereich von 1,5 bis 10 bar durchgeführt. Die Düsenplatte weist in der Regel mehrere Nester mit mehreren Löchern. Bei einem Lochdurchmesser im Bereich von 0,2 bis 1 mm erhält man expandierbare Polymerpartikel mit einem bevorzugten mittleren Partikeldurchmesser im Bereich von 0,5 bis 1,5 mm. Expandierbare Polymerpartikel mit enger Partikelgrößenverteilung und einem mittleren Partikeldurchmesser im Bereich von 0,6 bis 0,8 mm führen nach Vorschäumen zu einer besseren Ausfüllung des Formteilautomaten mit filigranere Formteilgestaltung. Des Weiteren wird dadurch eine bessere Formteiloberfläche erreicht mit weniger Zwickelvolumen.

Eine bevorzugte Polymermischungen in Stufe a) wird durch Mischen von
A) 45 bis 97,9 Gewichtsprozent, insbesondere 55 bis 78,1 Gew.-% Styrolpolymeren,
B1) 1 bis 45 Gewichtsprozent, insbesondere 7 bis 15 Gew.-% Polyolefins mit einem Schmelzpunkt im Bereich von 105 bis 140°C,
B2) 0 bis 25 Gewichtsprozent, insbesondere 5 bis 10 Gew.-% eines Polyolefins mit einem Schmelzpunkt unter 105°C,
C1) 0,1 bis 25 Gewichtsprozent, insbesondere 6 bis 15 Gew.-% eines Styrol-Butadien- oder Styrol-Isopren-Blockcopolymeren,
C2) 0 bis 10 Gewichtsprozent, insbesondere 0,8 bis 3 Gew.-% eines Styrol-Ethylen-Butylen-Blockcopolymeren,
E) 0 bis 5 Gewichtsprozent, insbesondere 0,3 bis 2 Gew.-% eines Nukleierungsmittels,
erhalten und
in Stufe b) mit 1 bis 15 Gew.-%, insbesondere 3 bis 10 Gew.-% eines Treibmittels D) imprägniert, wobei die Summe aus A) bis E) 100 Gew.-% ergibt, und in Stufe c) granuliert.

Zur Verbesserung der Verarbeitbarkeit können die fertigen expandierbaren thermoplastischen Polymerpartikel durch Glycerinester, Antistatika oder Antiverklebungsmittel beschichtet werden.

Bevorzugt werden die erhaltenen runden oder ovalen Partikel auf einen Durchmesser im Bereich von 0,2 bis 10 mm aufgeschäumt. Ihre Schüttdichte liegt vorzugsweise im Bereich von 10 bis 100 g/l.

Die Verschweißung der vorgeschäumten Schaumstoffperlen zum Formteil und die daraus resultierenden mechanischen Eigenschaften werden insbesondere durch Beschichtung der expandierbaren thermoplastischen Polymerpartikel mit einem Glycerinstearat verbessert. Besonders bevorzugt wird eine Beschichtung aus 50 bis 100 Gew.-% Glycerintristearat (GTS), 0 bis 50 Gew.-% Glycerinmonostearat (GMS) und 0 bis 20 Gew.-% Kieselsäure verwendet.

Die expandierbaren, thermoplastischen Polymerpartikel können mittels Heißluft oder Wasserdampf zu Schaumstoffpartikeln mit einer Dichte im Bereich von 8 bis 200 kg/m³, bevorzugt im Bereich von 10 bis 80 kg/m³ vorgeschäumt und anschließend in einer geschlossenen Form zu Schaumstoffformkörpern verschweißt werden. Hierbei wird der Verarbeitungsdruck so niedrig gewählt wird, dass die Domänenstruktur in den Zellmembranen erhalten bleibt. Üblicherweise wird ein Überdruck im Bereich von 0,5 bis 1,5 bar gewählt.

Die so erhältlichen thermoplastischen Partikelschaumstoffe weisen bevorzugt Zellen einer mittleren Zellgröße im Bereich von 50 bis 250 µm und eine faserförmig verstreckte, disperse Phase in den Zellwänden der thermoplastischen Partikelschaumstoffe mit einem mittleren Durchmesser im Bereich von 10 bis 1000 nm, besonders bevorzugt im Bereich von 100 bis 750 nm auf.

### Schaumstoffpartikel P2

Als Schaumstoffpartikel P2 werden von P1 verschiedene Schaumstoffpartikel, insbesondere aus Styrolpolymeren oder Polyolefinen, wie expandiertes Polypropylen (EPP) expandiertes Polyethylen (EPE) oder vorgeschäumtes, expandierbares Polystyrol (EPS) eingesetzt. Es können auch Kombinationen verschiedener Schaumstoffpartikel eingesetzt werden. Vorzugsweise handelt es sich um thermoplastische Materialien. Es können auch vernetzte Polymere, beispielsweise strahlenvernetzte Polyolefinschaumstoffpartikel verwendet werden.

Die Schaumstoffpartikel auf Basis von Styrolpolymeren können durch Vorschäumen von EPS mit Heißluft oder Wasserdampf in einem Vorschäumer auf die gewünschte Dichte erhalten werden. Durch ein- oder mehrmaliges Vorschäumen in einem Druck- oder kontinuierlichen Vorschäumer können hierbei Endschüttdichten unter 10 g/l erhalten werden.

Zur Herstellung von Dämmstoffplatten mit hoher Wärmedämmfähigkeit verwendet man besonders bevorzugt vorgeschäumte, expandierbare Styrolpolymerisate, die athermane Festkörper, wie Ruß, Aluminium, Graphit oder Titandioxid, insbesondere Graphit einer mittleren Partikelgröße im Bereich von 1 bis 50 µm Partikeldurchmesser in Mengen von 0,1 bis 10 Gew.-%, insbesondere 2 bis 8 Gew.-%, bezogen auf EPS, enthalten und beispielsweise aus EP-B 981 574 und EP-B 981 575 bekannt sind.

Besonders Wärmeform- und Lösungsmittel -beständige Schaumstoffpartikel P2 erhält man aus expandierbaren Styrolpolymeren, beispielsweise α-Methylstyrol/Acrylnitril-Polymeren (AMSAN) wie α-Methylstyrol/Acrylnitril-Copolymere oder α-Methylstyrol/Styrol/Acrylnitril-Terpolymeren, deren Herstellung in WO 2009/000872 beschrieben ist. Des Weiteren können Schaumstoffpartikel P2 auf Basis von Styrol-Olefin-Interpolymeren oder schlagzäh-modifizieren Styrolpolymeren, wie Schlagzähpolystyrol (HIPS) eingesetzt werden.

Bei dem Verfahren können auch zerkleinerte Schaumstoffpartikel aus recyclierten Schaumstoffformkörpern eingesetzt werden. Zur Herstellung der erfindungsgemäßen Partikelschaumstoffe können die zerkleinerten Schaumstoffrecyclate zu 100 % oder z. B. in Anteilen von 2 bis 90 Gew.-% insbesondere 5 bis 25 Gew.-%, bezogen auf die Schaumstoffpartikel P2, zusammen mit Neuware ohne wesentliche Beeinträchtigung der Festigkeit und der mechanischen Eigenschaften eingesetzt werden.

Die Schaumstoffpartikel P2 können ebenfalls Additive, Keimbildner, Weichmacher, halogenhaltige oder halogenfreie Flammschutzmittel, lösliche und unlösliche anorganische und/oder organische Farbstoffe und Pigmente oder Füllstoffe in üblichen Mengen enthalten.

### Herstellung der erfindungsgemäßen Partikelschaumstoffe

Die erfindungsgemäß eingesetzten Schaumstoffpartikel P1 zeigen eine überraschend gute Kompatibilität mit den Schaumstoffpartikeln P2 und können mit diesen daher verschweißt werden können. Hierbei können auch vorgeschäumte Perlen verschiedener Dichte verwendet werden. Zur Herstellung der erfindungsgemäßen Partikelschaumstoffe werden bevorzugt Schaumstoffpartikel P1 und P2, die jeweils eine Dichte im Bereich von 5 bis 50 kg/m³ aufweisen, eingesetzt.

Nach einer Ausführungsform können die Schaumstoffpartikel P1 und P2 gemischt und in einer Form mit Heißluft oder Wasserdampf versintert werden. Bevorzugt besteht die eingesetzte Mischung aus 10 bis 95 Gew.-%, besonders bevorzugt 15 bis 80 Gew.-% Schaumstoffpartikel P1 und 5 bis 90 Gew.-%, besonders bevorzugt 20 bis 85 Gew.-% Schaumstoffpartikel P2.

In einer weiteren Ausführungsform können die Schaumstoffpartikel P1 und P2 im Wesentlichen vermischungsfrei in eine Form gefüllt und mit Heißluft oder Wasserdampf versintert werden. Beispielsweise können die Schaumstoffpartikel P1 und P2 in ein oder mehreren Schichten in eine Form gefüllt und mit Heißluft oder Wasserdampf versintert werden.

Mit den erfindungsgemäßen Verfahrenalternativen können PartikelschaumstoffFormteile auf vielfältige Weise gestaltet und für Eigenschaften and die gewünschte Anwendung angepasst werden. Hierfür können die Mengenverhältnisse, die Dichte oder auch die Farbe der Schaumpartikel P1 und P2 in der Mischung variiert werden. Es resultieren Formteile mit einzigartigen Eigenschaftsprofilen.

Hierfür können beispielsweise Formteilmaschinen, die zur Herstellung von Formteilen mit unterschiedlicher Dichteverteilung geeignet sind, genutzt werden. Diese weisen in der Regel ein oder mehrere Schiebeelemente auf, die nach dem Befüllen der unterschiedlichen Schaumpartikel P1 und P2 oder während der Verschweißung herausgenommen werden können. Es ist aber auch möglich, die eine Sorte von Schaumstoffpartikel P1 oder P2 einfüllt und verschweißt und anschließend die andere Sorte der Schaumstoffpartikel nachfüllt und mit dem bereits vorliegenden Teilstück des Schaumstoffformteils verschweißt

Auf dies weise lassen sich auch Formteile, beispielsweise Paletten für den Stückgutversand herstellen, bei denen beispielsweise die Rippen oder Füße aus Schaumpartikeln P1 und der übrige Formkörper aus Schaumpartikeln P2 gefertigt sind.

Aufgrund Verträglichkeit der Schaumstoffpartikel P1 und P2 ist ein praktisch sortenreines Recycling ohne Zerlegung in die Einzelkomponenten möglich.

### Verwendung der erfindungsgemäßen Partikelschaumstoffe

Die erfindungsgemäßen Partikelschaumstoffe eignen sich aufgrund ihres zwischen Partikelschaumstofferf aus expandiertem Polypropylen (EPP) und expandierbarem Polystyrol (EPS) liegenden Eigenschaftsprofil prinzipiell für die üblichen Anwendungen beider Schaumstofftypen.

Auf Grund ihrer Elastizität finden sie insbesondere Verwendung für stoßdämpfende Verpackungen, als Kernmaterial für Kraftfahrzeugstoßstangen, zur Innenauskleidung von Kraftfahrzeugen, als Polstermaterial, sowie als Wärme- und Schalldämmmaterial. Die erfindungsgemäßen Partikelschaumstoffe eignen sich insbesondere zur Herstellung von Verpackungs- und Dämpfungsmaterialien oder Verpackungen mit verbesserter Bruch- und Rissbeständigkeit.

Die erfindungsgemäßen Partikelschaumstoffe eignen sich aufgrund ihrer Elastizität auch als Innenauskleidung von Schutzhelmen, wie Ski-, Motorrad- oder Fahrradhelme, um mechanischen Stöße abzufedern oder im Sport- und Freizeitbereich. Kernmaterialien für Surfbretter.

Aufgrund der hohen Wärme- und Schalldämmung sind aber auch Anwendungen im Baubereich möglich. Zur Fußbodendämmung werden üblicherweise Schaumstoffplatten verwendet, die direkt auf den Betonboden aufgelegt werden. Besonders wichtig wegen der Wärmedämmung nach unten ist dies bei Fußbodenheizungen. Hier werden in entsprechende Profilierungen der Schaumstoffplatten die Heißwasserrohre eingelegt. Über die Schaumstoffplatten wird ein Zementestrich aufgezogen, auf dem dann Holz- oder Teppichboden verlegt werden kann. Zusätzlich wirken die Schaumstoffplatten noch als Trittschalldämmung.

Die erfindungsgemäßen Formkörper eignen sich auch als Kernmaterial für Sandwichkonstruktionen im Schiff-, Luftfahrt-, Windenergieanlagen- und Fahrzeugbau. Sie können beispielweise zur Herstellung von Kraftfahrzeugteilen, wie Kofferraumböden, Hutablagen und Seitentürverkleidungen dienen.

Die Verbundformteile werden bevorzugt zur Herstellung von Möbeln, von Verpackungsmaterialien, im Hausbau, im Trockenausbau oder im Innenausbau, beispielsweise als Laminat, Dämmstoff, Wand- oder Deckenelement, eingesetzt. Die neuen Verbundformteile finden vorzugsweise im Kraftfahrzeugbau Verwendung, z.B. als Türverkleidungen, Armaturenbretter, Konsolen, Sonnenblenden, Stoßfänger, Spoiler und dergleichen.,

Aufgrund der gegenüber Partikelschaumstoffen aus expandierbarem Polystyrol (EPS) höheren Elastizität und Rissbeständigkeit bei gleichzeitig hoher Drucksteifigkeit, eignen sich die erfindungsgemäßen Schaumstoffpartikel insbesondere zur Herstellung von Paletten. Zur Verbesserung der Haltbarkeit der Paletten können diese gegebenenfalls mit Holz, Kunststoff oder Metall verklebt oder mit einer Kunststofffolie, beispielsweise aus Polyolefinen oder Styrol-Butadien-Blockcopolymeren allseitig ummantelt werden.

Ferner betrifft die vorliegende Erfindung die Verwendung der erfindungsgemäßen Formkörper, bevorzugt der erfindungsgemäßen Holzwerkstoffe zur Herstellung von Möbeln, von Verpackungsmaterialien, im Hausbau, im Trockenausbau oder im Innenausbau, beispielsweise als Laminat, Dämmstoff, Wand- oder Deckenelement, oder auch in Kraftfahrzeugen.

### Beispiele

Einsatzstoffe für die Schaumstoffpartikel P1:
Komponente A: Polystyrol mit einem Schmelzeviskositätsindex MVI (200°C/5kg) von 2,9 cm³/10 min (PS 158K der BASF SE, M_{w} = 280.000 g/mol, Viskositätszahl VN 98 ml/g)
Komponente B:
   B1: Polyethylen PE-LLD (LL1201 XV, Exxon Mobile, Dichte 0,925 g/L, MVI = 0,7 g/10 min, Schmelzpunkt 123°C)
   B2: Polyethylen Ethylen-Octen-Copolymer (Exact®, 210 der Fa. ExxonMobile, Dichte 0,902 g/L, MVI = 10 g/10 min, Schmelzpunkt 95°C)
Komponente C:
   C1 Styroflex® 2G66, thermoplastisch elstisches Styrol-Butadien-Blockcopolymer der BASF SE,
   C2 Kraton G 1652, Styrol-Ethylen-Butylen-Blockcopolymer der Kraton Polymers LLC
Komponente D: Treibmittel: (95% iso-Pentan, 5% n-Pentan)
Komponente E: Talkum (HP 320, Omyacarb)

### Herstellung der Schaumstoffpartikel P1:

In einem Zweischneckenextruder der Firma Leitritz ZE 40 wurden die Komponenten A) bis C) bei 240 - 260°C / 140 bar aufgeschmolzen und mit Talkum als Nukleierungsmittel (Komponente E) versetzt (siehe Tabelle 1). Anschließend wurde in die Polymerschmelze das Treibmittel (Komponente D) gedrückt und über zwei statische Mischer homogen in die Polymerschmelze eingearbeitet. Danach wurde über einen Kühler die Temperatur auf 180°-195°C reduziert. Nach weiterer Homogenisierung über zwei weitere statische Mischer, wurde die Polymerschmelze mit 50 kg/h durch eine auf 240 - 260°C temperierte Lochplatte bei 200 - 220 bar gedrückt (0,6 mm Lochdurchmesser mit 7 Nester x 7 Löcher oder 0,4 mm Lochdurchmesser mit 7 Nester x 10 Löcher). Der Polymerstrang wurde mittels Unterwassergranulierung abgeschlagen (11-10 bar Unterwasserdruck bei 40°C-50°C Wassertemperatur), so dass ein treibmittelbeladenes Minigranulat mit enger Teilchengrößenverteilung (d'= 1,2 mm bei 0,65 mm Lochdurchmesser) erhalten wurde.

Als Beschichtungskomponenten wurde 70 Gew.-% Gycerintristearat (GTS) und 30 Gew.-% Glycerinmonostearat (GMS) verwendet. Das Beschichtungsmittel hatte einen positiven Effekt auf die Verschweißung der vorgeschäumten Schaumstoffperlen zum Formteil. Die Biegefestigkeit konnte auf 250 bzw. 310 KPa gegenüber 150 kPa der aus den unbeschichteten Granulaten erhaltenen Formteile erhöht werden.

**Tabelle 1: Zusammensetzung der expandierbaren Polymerpartikel (EPS) in Gewichtsanteilen für die Herstellung der Schaumstoffpartikel P1.1, P1.2 und P1.3**

| Beispiel | Komp. A [Gew.-%] | Komp. B1 [Gew.-%] | Komp. B2 [Gew.-%] | Komp. C2 [Gew.-%] | Komp. C1 [Gew.-%] | Komp. E [Gew.-%] | Komp. D [Gew.-%] |
|---|---|---|---|---|---|---|---|
| P1.1 | 67,2 | 7,5 | 4,7 | 0,7 | 13,2 | 0,5 | 6,1 |
| P1.2 | 67,9 | 7,5 | 4,7 | 0 | 13,2 | 0,5 | 6,1 |
| P1.3 V | 81,1 | 7,5 | 4,7 | 0 | 0 | 0,5 | 6,1 |

In einer transmissionselektronenmikroskopischen Aufnahme (TEM) kann die disperse Verteilung des Polyethylens (Phase P1 helle Bereiche) und disperse Verteilung des Styrol-Butadien-Blockcopolymer (Phase P2, dunkle Bereiche) im treibmittelhaltigen Minigranulat, die später zur Elastifizierung im Schaum beitragen, erkannt werden. Die PE-Domänen des treibmittelbeladenen Minigranulats liegen dabei in der Größenordnung von 200 bis 1000 nm, die Styrol-Butadien-Blockcopolymer-Domänen in der Größenordnung von 200 bis 1500 nm.

Das treibmittelhaltige Granulat wurde in einem EPS-Vorschäumer zu Schaumperlen geringer Dichte (17,7 kg/m³)vorgeschäumt.

### Schaumstoffpartikel P2:

Neopror® X 5300 (Graphit-haltiges expandierbares Polystyrol der BASF SE) wurde auf eine Dichte von 16,1 kg/m³ vorgeschäumt.

### Beispiele 1 bis 23: Formteilherstellung:

Schaumstoffpartikel P1 und P2 wurden im Mengenverhältnis gemäß Tabelle 2 gemischt und in einem EPS-Formteilautomaten bei einem Überdruck von 1,1 bar zu Formteilen verarbeitet.

An den Formteilen wurden verschiedene mechanische Messungen durchgeführt um die Elastifizierung des Schaumstoffs nachzuweisen. Bei den erfindungsgemäßen Beispielen wird im Vergleich zum reinen EPS eine deutliche Elastifizierung beobachtet, die an dem sehr hohen Rückstellungsvermögen erkennbar ist. Die Druckfestigkeit wurde bei 10% Stauchung nach DIN-EN 826 und die Biegefestigkeit nach DIN-EN 12089 bestimmt. Die Biegearbeit wurde aus den Messwerten zur Biegefestigkeit ermittelt

Das Beispiel 5V stellt einen Vergleichsversuch dar.

**Tabelle 2: Eigenschaften der Partikelschaumstoffe aus unterschiedlichen Anteilen an Schaumstoffpartikeln P1.1:**

| Beispiel | 1 | 2 | 3 | 4 | 5V |
|---|---|---|---|---|---|
| P1.1 | 95% | 60% | 40% | 20% | 0% |
| P2 | 5% | 40% | 60% | 80% | 100% |
| Dichte [g/l] | 17,7 | 17,3 | 16,8 | 16,6 | 16,1 |
| Biegearbeit [Nm] | 5,4 | 4,2 | 3,7 | 3,1 | 2,7 |
| Biegefestigkeit [kPa] | 250,7 | 247,9 | 243,5 | 239,3 | 228,3 |

Die Beispiele zeigen, dass die Schaumstoffpartikel P2 über weite Bereiche mit den erfindungsgemäß verwendeten Schaumstoffpartikel P1 gemischt werden können. Auf diese Weise können die mechanischen Eigenschaften, beispielsweise die Biegearbeit, gezielt eingestellt werden.

**Tabelle 3: Biegearbeit [Nm] der Partikelschaumstoffe aus unterschiedlichen Anteilen an Schaumstoffpartikeln P1.1**

| Beispiel | 6 | 7 | 8 | 9 | 10 |
|---|---|---|---|---|---|
| Anteil P2 [Gew.-%] | 5 | 20 | 40 | 60 | 80 |
| Anteil P1.1 [Gew.-%] | 95 | 80 | 60 | 40 | 20 |
| Biegearbeit [Nm] | 5,5 | 5,0 | 4,2 | 3,7 | 3,1 |

**Tabelle 4: Biegearbeit [Nm] der Partikelschaumstoffe aus unterschiedlichen Anteilen an Schaumstoffpartikeln P1.2**

| Beispiel | 11 | 12 | 13 | 14 | 15 |
|---|---|---|---|---|---|
| Anteil P2 [Gew.-%] | 5 | 20 | 40 | 60 | 80 |
| Anteil P1.2 [Gew.-%] | 95 | 80 | 60 | 40 | 20 |
| Biegearbeit [Nm] | 4,2 | 4,0 | 3,5 | 3,3 | 3,2 |

**Tabelle 5: Biegearbeit [Nm} der Partikelschaumstoffe aus unterschiedlichen Anteilen an Schaumstoffpartikeln P1.3 V**

| | 16 | 17 | 18 | 19 | 20 |
|---|---|---|---|---|---|
| Anteil P2 [Gew.-%] | 5 | 20 | 40 | 60 | 80 |
| Anteil P1.3V [Gew.-%] | 95 | 80 | 60 | 40 | 20 |
| Biegearbeit [Nm] | 3,1 | 2,8 | 2,9 | 3,0 | 2,7 |

## Patentansprüche

1. Verfahren zur Herstellung von Partikelschaumstoffen durch Versintern einer Mischung enthaltend Schaumstoffpartikel P1 und P2 aus unterschiedlichen thermoplastischen Polymeren oder Polymermischungen, wobei die Schaumstoffpartikel P1 und P2 eine Dichte im Bereich von 5 bis 80 kg/m³ aufweisen, **dadurch gekennzeichnet, dass** die Schaumstoffpartikel P1 durch Vorschäumen von expandierbaren, thermoplastischen Polymerpartikeln, enthaltend
A) 45 bis 97,9 Gewichtsprozent eines Styrolpolymeren,
B1) 1 bis 45 Gewichtsprozent eines Polyolefins mit einem mittels DSC bei einer Aufheizrate von 10°C/Minute ermitteltem Schmelzpunkt im Bereich von 105 bis 140°C,
B2) 0 bis 25 Gewichtsprozent eines Polyolefins mit einem mittels DSC bei einer Aufheizrate von 10°C/Minute ermitteltem Schmelzpunkt unter 105°C,
C1) 0,1 bis 25 Gewichtsprozent eines Styrol-Butadien- oder Styrol-Isopren-Blockcopolymeren,
C2) 0,0 bis 10 Gewichtsprozent eines Styrol-Ethylen-Butylen-Blockcopolymeren,
D) 1 bis 15 Gewichtsprozent eines Treibmittels,
E) 0 bis 5 Gewichtsprozent eines Nukleierungsmittels
wobei die Summe aus A) bis E) 100 Gew.-% ergibt, erhalten werden.

2. Verfahren nach Anspruch 1, **dadurch gekennzeichnet, dass** die Schaumstoffpartikel P1 durch Vorschäumen von expandierbaren, thermoplastischen Polymer-partikeln, enthaltend
A) 55 bis 78,1 Gewichtsprozent eines Styrolpolymeren,
B1) 7 bis 15 Gewichtsprozent eines Polyolefins mit einem mittels DSC bei einer Aufheizrate von 10°C/Minute ermitteltem Schmelzpunkt im Bereich von 105 bis 140°C,
B2) 5 bis 10 Gewichtsprozent eines Polyolefins mit einem mittels DSC bei einer Aufheizrate von 10°C/Minute ermitteltem Schmelzpunkt unter 105°C,
C1) 6 bis 15 Gewichtsprozent eines Styrol-Butadien- oder Styrol-Isopren-Blockcopolymeren,
C2) 0,8 bis 3 Gewichtsprozent eines Styrol-Ethylen-Butylen-Blockcopolymeren,
D) 3 bis 10 Gewichtsprozent eines Treibmittels,
E) 0,3 bis 2 Gewichtsprozent eines Nukleierungsmittels,
wobei die Summe aus A) bis E) 100 Gew.-% ergibt, erhalten werden.

3. Verfahren nach Anspruch 1 oder 2, **dadurch gekennzeichnet, dass** die zur Herstellung der Schaumstoffpartikel P1 eingesetzten expandierbaren, thermoplastischen Polymerpartikel als Styrolpolymer A) Standard-Polystyrol (GPPS) enthalten.

4. Verfahren nach einem der Ansprüche 1 bis 3, **dadurch gekennzeichnet, dass** die zur Herstellung der Schaumstoffpartikel P1 eingesetzten expandierbaren, thermoplastischen Polymerpartikel als Polyolefin B1) Polyethylen enthalten.

5. Verfahren nach einem der Ansprüche 1 bis 4, **dadurch gekennzeichnet, dass** die zur Herstellung der Schaumstoffpartikel P1 eingesetzten expandierbaren, thermoplastischen Polymerpartikel als Polyolefin B2) ein Copolymer aus Ethylen und Octen enthalten.

6. Verfahren nach einem der Ansprüche 1 bis 5, **dadurch gekennzeichnet, dass** die zur Herstellung der Schaumstoffpartikel P1 eingesetzten expandierbaren, thermoplastischen Polymerpartikel eine disperse Phase mit einem mittleren Durchmesser im Bereich von 1 bis 1500 nm aufweisen.

7. Verfahren nach einem der Ansprüche 1 bis 6, **dadurch gekennzeichnet, dass** als Schaumstoffpartikel P2 von P1 verschiedene Schaumstoffpartikel aus Styrolpolymeren oder Polyolefinen eingesetzt werden.

8. Verfahren nach Anspruch 7, **dadurch gekennzeichnet, dass** als Schaumstoffpartikel P2 expandiertes Polypropylen (EPP) oder vorgeschäumtes, expandierbares Polystyrol (EPS) eingesetzt werden.

9. Verfahren nach einem der Ansprüche 1 bis 8, **dadurch gekennzeichnet, dass** die zur Herstellung der Partikelschaumstoffe eingesetzte Mischung aus 10 bis 95 Gew.-% Schaumstoffpartikel P1 und 5 bis 90 Gew.-% Schaumstoffpartikel P2 bestehen.

10. Verfahren nach einem der Ansprüche 1 bis 9, **dadurch gekennzeichnet, dass** die Schaumstoffpartikel P1 und P2 gemischt und in einer Form mit Heißluft oder Wasserdampf versintert werden.

11. Verfahren nach einem der Ansprüche 1 bis 9, **dadurch gekennzeichnet, dass** die Schaumstoffpartikel P1 und P2 im wesentlichen vermischungsfrei in eine Form gefüllt und mit Heißluft oder Wasserdampf versintert werden.

12. Verfahren nach Anspruch 11, **dadurch gekennzeichnet**, das die Schaumstoffpartikel P1 und P2 in ein oder mehreren Schichten in eine Form gefüllt und mit Heißluft oder Wasserdampf versintert werden.

13. Partikelschaumstoffe, erhältlich nach einem der Ansprüche 1 bis 12.

## Claims

1. A process for producing expanded polymer foams by sintering a mixture comprising foam particles P1 and P2 composed of different thermoplastic polymers or polymer blends, wherein the foam particles P1 and P2 have a density in the range from 5 to 80 kg/m³ and the foam particles P1 are obtained by prefoaming expandable, thermoplastic polymer particles comprising
A) from 45 to 97.9 percent by weight of a styrene polymer,
B1) from 1 to 45 percent by weight of a polyolefin having a melting point determined by means of DSC at a heating rate of 10°C/minute in the range from 105 to 140°C,
B2) from 0 to 25 percent by weight of a polyolefin having a melting point determined by means of DSC at a heating rate of 10°C/minute below 105°C,
C1) from 0.1 to 25 percent by weight of a styrene-butadiene or styrene-isoprene block copolymer,
C2) from 0.0 to 10 percent by weight of a styrene-ethylene-butylene block copolymer,
D) from 1 to 15 percent by weight of a blowing agent,
E) from 0 to 5 percent by weight of a nucleating agent,
where the sum of A) to E) is 100% by weight.

2. The process according to claim 1, wherein the foam particles P1 are obtained by prefoaming expandable, thermoplastic polymer particles comprising
A) from 55 to 78.1 percent by weight of a styrene polymer,
B1) from 7 to 15 percent by weight of a polyolefin having a melting point determined by means of DSC at a heating rate of 10°C/minute in the range from 105 to 140°C,
B2) from 5 to 10 percent by weight of a polyolefin having a melting point determined by means of DSC at a heating rate of 10°C/minute below 105°C,
C1) from 6 to 15 percent by weight of a styrene-butadiene or styrene-isoprene block copolymer,
C2) from 0.8 to 3 percent by weight of a styrene-ethylene-butylene block copolymer,
D) from 3 to 10 percent by weight of a blowing agent,
E) from 0.3 to 2 percent by weight of a nucleating agent,
where the sum of A) to E) is 100% by weight.

3. The process according to claim 1 or 2, wherein the expandable, thermoplastic polymer particles used for producing the foam particles P1 comprise general purpose polystyrene (GPPS) as styrene polymer A).

4. The process according to any of claims 1 to 3, wherein the expandable, thermoplastic polymer particles used for producing the foam particles P1 comprise polyethylene as polyolefin B1).

5. The process according to any of claims 1 to 4, wherein the expandable, thermoplastic polymer particles used for producing the foam particles P1 comprise a copolymer of ethylene and octene as polyolefin B2).

6. The process according to any of claims 1 to 5, wherein the expandable, thermoplastic polymer particles used for producing the foam particles P1 have a disperse phase having an average diameter in the range from 1 to 1500 nm.

7. The process according to any of claims 1 to 6, wherein foam particles composed of styrene polymers or polyolefins which are different from P1 are used as foam particles P2.

8. The process according to claim 7, wherein expanded polypropylene (EPP) or prefoamed, expandable polystyrene (EPS) is used as foam particles P2.

9. The process according to any of claims 1 to 8, wherein the mixture used for producing the expanded polymer foams comprises from 10 to 95% by weight of foam particles P1 and from 5 to 90% by weight of foam particles P2.

10. The process according to any of claims 1 to 9, wherein the foam particles P1 and P2 are mixed and sintered in a mold by means of hot air or steam.

11. The process according to any of claims 1 to 9, wherein the foam particles P1 and P2 are introduced essentially without mixing into a mold and sintered by means of hot air or steam.

12. The process according to claim 11, wherein the foam particles P1 and P2 are introduced in one or more layers into a mold and sintered by means of hot air or steam.

13. An expanded polymer foam which can be obtained according to any of claims 1 to 12.

## Revendications

1. Procédé pour la fabrication de mousses de particules par frittage d'un mélange contenant des particules de mousse P1 et P2 constituées de différents polymères thermoplastiques ou de différents mélanges de polymères thermoplastiques, les particules de mousse P1 et P2 présentant une densité dans la plage de 5 à 80 kg/m³, **caractérisé en ce que** les particules de mousse P1 sont obtenues par prémoussage de particules polymères expansibles, thermoplastiques, contenant
A) 45 à 97,9% en poids d'un polymère du styrène,
B1) 1 à 45% en poids d'une polyoléfine présentant un point de fusion, déterminé au moyen de DSC (calorimétrie différentielle à balayage) à une vitesse de chauffage de 10°C/minute, dans la plage de 105 à 140°C,
B2) 0 à 25% en poids d'une polyoléfine présentant un point de fusion, déterminé au moyen de DSC (calorimétrie différentielle à balayage) à une vitesse de chauffage de 10°C/minute, inférieur à 105°C,
C1) 0,1 à 25% en poids d'un copolymère à blocs de styrène-butadiène ou de styrène-isoprène,
C2) 0,0 à 10% en poids d'un copolymère à blocs de styrène-éthylène-butylène,
D) 1 à 15% en poids d'un agent gonflant,
E) 0 à 5% en poids d'un agent de nucléation,
la somme de A) à E) valant 100% en poids.

2. Procédé selon la revendication 1, **caractérisé en ce que** les particules de mousse P1 sont obtenues par prémoussage de particules polymères expansibles, thermoplastiques, contenant
A) 55 à 78,1% en poids d'un polymère du styrène,
B1) 7 à 15% en poids d'une polyoléfine présentant un point de fusion, déterminé au moyen de DSC (calorimétrie différentielle à balayage) à une vitesse de chauffage de 10°C/minute, dans la plage de 105 à 140°C,
B2) 5 à 10% en poids d'une polyoléfine présentant un point de fusion, déterminé au moyen de DSC (calorimétrie différentielle à balayage) à une vitesse de chauffage de 10°C/minute, inférieur à 105°C,
C1) 6 à 15% en poids d'un copolymère à blocs de styrène-butadiène ou de styrène-isoprène,
C2) 0,8 à 3% en poids d'un copolymère à blocs de styrène-éthylène-butylène,
D) 3 à 10% en poids d'un agent gonflant,
E) 0,3 à 2% en poids d'un agent de nucléation,
la somme de A) à E) valant 100% en poids.

3. Procédé selon la revendication 1 ou 2, **caractérisé en ce que** les particules polymères thermoplastiques, expansibles, utilisées pour la préparation des particules de mousse P1 contiennent, comme polymère de styrène A), du polystyrène standard (GPPS).

4. Procédé selon l'une quelconque des revendications 1 à 3, **caractérisé en ce que** les particules polymères thermoplastiques, expansibles, utilisées pour la préparation des particules de mousse P1 contiennent, comme polyoléfine B1), du polyéthylène.

5. Procédé selon l'une quelconque des revendications 1 à 4, **caractérisé en ce que** les particules polymères thermoplastiques, expansibles, utilisées pour la préparation des particules de mousse P1 contiennent, comme polyoléfine B2), un copolymère d'éthylène et d'octène.

6. Procédé selon l'une quelconque des revendications 1 à 5, **caractérisé en ce que** les particules polymères thermoplastiques, expansibles, utilisées pour la préparation des particules de mousse P1 présentent une phase dispersée présentant un diamètre moyen dans la plage de 1 à 1500 nm.

7. Procédé selon l'une quelconque des revendications 1 à 6, **caractérisé en ce qu'**on utilise, comme particules de mousse P2, des particules de mousse différentes de P1 constituées de polymères de styrène ou de polyoléfines.

8. Procédé selon la revendication 7, **caractérisé en ce qu'**on utilise comme particules de mousse P2 du polypropylène expansé (EPP) ou du polystyrène expansible, prémoussé (EPS).

9. Procédé selon l'une quelconque des revendications 1 à 8, **caractérisé en ce que** le mélange utilisé pour la fabrication des mousses de particules est constitué par 10 à 95% en poids de particules de mousse P1 et 5 à 90% en poids de particules de mousse P2.

10. Procédé selon l'une quelconque des revendications 1 à 9, **caractérisé en ce que** les particules de mousse P1 et P2 sont mélangées et frittées dans un moule avec de l'air chaud ou de la vapeur d'eau.

11. Procédé selon l'une quelconque des revendications 1 à 9, **caractérisé en ce que** les particules de mousse P1 et P2 sont chargées de manière sensiblement sans mélange dans un moule et frittées avec de l'air chaud ou de la vapeur d'eau.

12. Procédé selon la revendication 11, **caractérisé en ce que** les particules de mousse P1 et P2 sont chargées en une ou plusieurs couches dans un moule et frittées avec de l'air chaud ou de la vapeur d'eau.

13. Mousses de particules pouvant être obtenues selon l'une quelconque des revendications 1 à 12.
